**Europäisches Patentamt**

**European Patent Office**

**Office européen des brevets**

(19)

(11) Publication number: **0 038 214**
A2

(12) **EUROPEAN PATENT APPLICATION**

(21) Application number: **81301647.4**

(22) Date of filing: **14.04.81**

(51) Int. Cl.³: **H 02 P 7/28,** H 02 P 3/12

(30) Priority: **15.04.80 GB 8012410**

(43) Date of publication of application: **21.10.81**
**Bulletin 81/42**

(84) Designated Contracting States: **DE FR GB IT SE**

(71) Applicant: **TECHNICAL OPERATIONS LIMITED,**
**Kingsway, Team Valley Gateshead NE11 0QA (GB)**

(72) Inventor: **Sloan, Albert Everett, 6 Summerfield Road,**
**Gateshead Tyne & Wear NE9 5BD (GB)**

(74) Representative: **Brown, David Alan, MATHYS &**
**SQUIRE 10 Fleet Street, London EC4Y 1AY (GB)**

(54) **Pulse control circuit for permanent magnet D.C. motor.**

(57) A pulse control circuit for a reversible permanent magnet d.c. motor comprises first and second thyristors $14_F$, $14_R$ and first and second transistor switches $15_F$, $15_R$ arranged in a bridge circuit so that on conduction of the first thyristor $14_F$ and first transistor switch $15_F$ current flows in one direction from a d.c. source 12 through the motor armature 10 whereas on conduction of the second thyristor $14_R$ and second transistor switch $15_R$ the current flow is reversed. To drive the motor in a selected direction a continuous gating pulse is applied to the appropriate thyristor $14_F$ or $14_R$ and the corresponding transistor switch $15_F$, or $15_R$ is switched on and off at a variable mark-to-space ratio. A freewheel diode $16_F$, $16_R$ is connected across each thyristor. Regenerative braking can be effected by holding both thyristors $14_F$, $14_R$ nonconducting and by switching on and off the transistor switch $15_F$, $15_R$ associated with drive of the motor in the direction opposite to that in which the armature 10 is rotating a further diode $17_F$, $17_R$ being connected across each transistor switch to provide a freewheel path for the armature current during non-conducting periods of the transistor switch.

COMPLETE DOCUMENT

ACTORUM AG

- 2 -

This invention relates to pulse control circuits for permanent magnet d.c. motors, i.e. for d.c. motors in which the field is generated by a permanent magnet.

Since the inductance of such a motor is relatively low (compared with the inductance of a wound-field motor), so that motor current falls rapidly in the interpulse periods, it is desirable for the pulse control circuit to operate at a relatively high frequency. It is therefore desirable to use transistors rather than thyristors as switching elements. In order to reverse such a motor, the voltage applied to the armature must be reversed, and, to avoid the use of contactors, it has been proposed to control the motor using a bridge circuit of transistors. This has the disadvantage that it requires power transistors, which are relatively expensive, in each arm of the bridge.

When d.c. motors, particularly vehicle traction motors, are supplied from a rechargeable battery, it is desirable to provide the facility for regenerative braking, in which a braking torque is developed whilst the motor acts as a generator driving charging current to the battery. Pulse control circuits are known for wound-field d.c. motors in which regenerative braking is available. However, these circuits involve reversing the connections of the field winding to the supply, to reverse the direction of the voltage generated by the armature, and therefore cannot be employed with a permanent magnet motor.

This invention consists in a pulse control circuit for a permanent magnet d.c. motor, comprising first and second thyristors and first and second transistor switches arranged in a bridge circuit with the thyristors in adjacent arms of the bridge and the first and second transistor switches in arms of the bridge opposite the first and second thyristors respectively, the d.c. supply being connected in use between the common junction of the two thyristors and the common junction of the two transistor switches, and the motor armature being connected in use between the junction of the first thyristor with the second transistor switch and the junction of the second thyristor with the first transistor switch, the arrangement being such that on conduction of the first thyristor and first transistor switch the voltage of the d.c. supply is applied in one direction to the armature whereas on conduction of the second thyristor and second transistor switch the voltage of the d.c. supply is applied in the opposite direction

- 4 -

to the armature, and control means for applying a gating
signal to a selected one of the first and second thyristors
and for repetitively switching on and off the associated
transistor switch thereby to drive the armature in the
direction corresponding to the selected thyristor,
a respective diode being connected in parallel with the series
connection of the armature and each thyristor to provide a
freewheel path for armature current during non-conducting periods
of the associated transistor switch.

Preferably, the control means is adapted
to effect regenerative braking of the motor by repetitively
switching on and off the transistor switch associated
with drive of the motor in one direction whilst the
armature is rotating in the opposite direction, the
other transistor switch and both thyristors remaining
non-conducting, a further respective diode being connected in
parallel with the non-conducting transistor switch
to provide with the operating transistor switch a closed
loop for circulation of the armature current when the
transistor switch is conducting and to provide, with the
diode connected across the associated thyristor and the
armature, a path through which the armature generated voltage
can drive current to the d.c. supply when the transistor
switch is non-conducting.

The invention will now be described, by way of example, with reference to the accompanying drawings, in which:

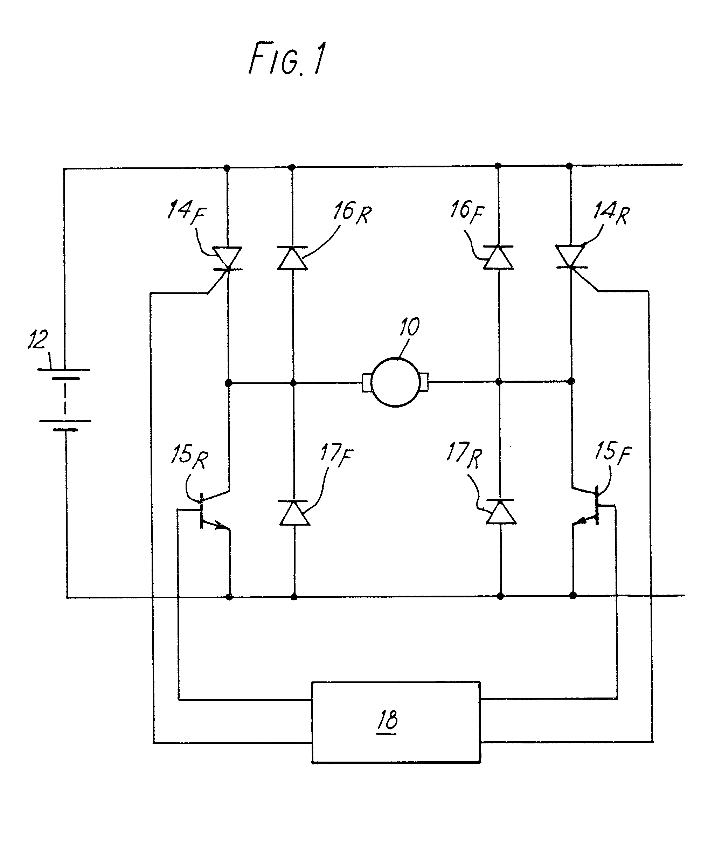

Figure 1 is a circuit diagram of a permanent magnet motor fitted with a pulse control circuit in accordance with the invention,

Figure 2 is a schematic block diagram of control circuitry part of the circuit of Figure 1,

Figure 3 shows the variation with time of the voltage at the collector of a transistor of the circuit of Fogure 1 during normal motoring, and

Figure 4 shows the variation with time of the voltage at the transistor collector and of the motor current during regenerative braking.

Referring to the drawings, the armature 10 of a d.c. motor having a field provided by a permanent magnet is supplied from a d.c. source such as a battery 12, through a pulse control circuit. The pulse control circuit comprises two thyristors $14_F$ and $15_R$ arranged in a bridge in such a manner that when thyristor $14_F$ and transistor $15_F$ are conducting (with thyristor $14_R$ and transistor $15_R$ non-conducting) current can flow from the battery 12 to the armature 10 in a direction to drive the motor in the "forward" direction, whereas on conduction of thyristor $14_R$ and transistor $15_R$ (with thyristor $14_F$ and transistor $15_F$ non-conducting) current can flow to the armature in a direction to drive the armature in the opposite, "reverse", direction. Thus, thyristor $14_F$ and transistor $15_R$ are connected in series across the battery 12, and thyristor $14_R$ and transistor $15_F$ are similarly connected across the battery 12, with the armature 10 connected between the junction of the cathode of thyristor $14_F$ with the collector of transistor $15_R$ and the junction of the cathode of thyristor $14_R$ with the collector of transistor $15_F$. A diode $16_F$ is connected in parallel with thyristor $14_R$, the anode of the diode being connected to the cathode of thyristor $14_R$. The diode $16_F$, together with the thyristor $14_F$, provides a freewheel path across the armature when the motor is driven "forwards", as described below. A diode $16_R$ is similarly connected in parallel with thyristor $14_F$, to provide a freewheel path when the motor is in the "reverse" driving mode. A diode $17_R$ is connected across the collector-emitter path of transistor $15_F$, and a diode $17_F$ is similarly connected across the collector-emitter path of transistor $15_R$.

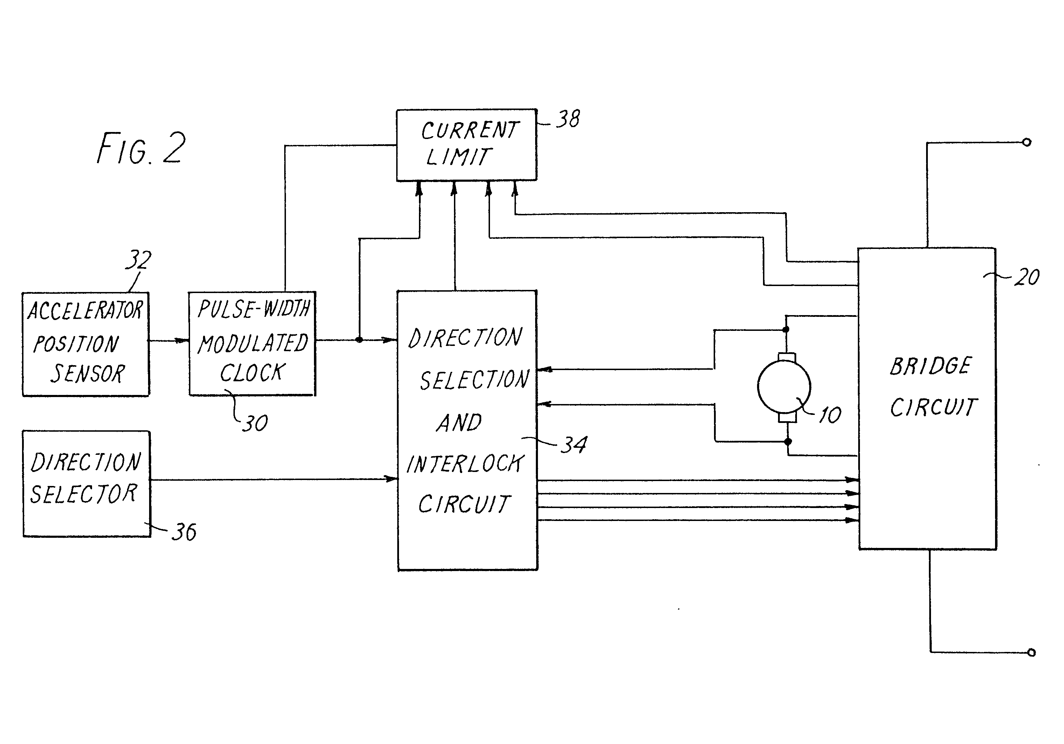

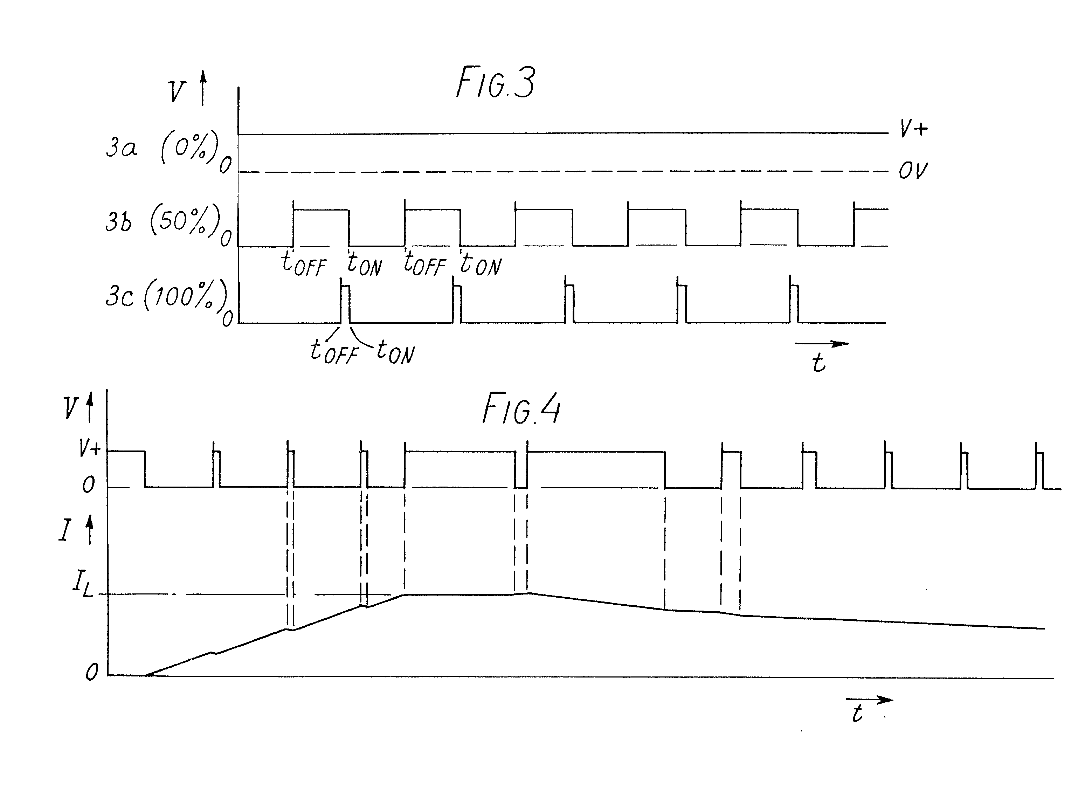

Conduction of thyristors $14_F$ and $14_R$ and of the transistors $15_F$ and $15_R$ is governed by control logic circuitry 18. As shown in Figure 2 the control circuit 18 includes a pulse-width modulated clock 30 which receives an input signal dependent on the desired mark-to-space ratio of switching of the transistor $15_F$ or $15_R$. The input signal may be for example from an accelerator position sensor such as a potentiometer coupled to the accelerator pedal of a vehicle driven by the motor 10. The output of clock 30 is supplied through a direction selection and interlock circuit 34 and suitable driving circuits to the base of transistor $15_F$ or $15_R$, to switch on the transistor at uniformly spaced intervals $t_{on}$ (Figure 3) and to switch off the transistor at times $t_{off}$ which vary in dependence on the input signal to vary the periods of conduction of the transistor. The circuit 34 also receives an input from a direction selector 36, which may be a manually operated switch, the circuit 34 controlling the conduction of the thyristors $14_F$, $14_R$ and transistors $15_F$, $15_R$ of the bridge circuit 20 in dependence on the drive direction selected by the direction selector 36 and on the direction of the voltage across the motor 10, as described below. The circuitry also includes a current limit circuit 38 which acts to limit the motor current during motoring and regenerative braking, as described below. The current limit circuit measures the motor current by monitoring the collector voltage of the transistor $15_F$ and $15_R$.

In operation, to drive the motor "forwards", a continuous gating voltage is applied to the gate electrode of thyristor $14_F$ whilst transistor $15_F$ is rendered repetitively conducting and non-conducting.

Thyristor $14_R$ and transistor $15_R$ remain non-conducting. When transistor $15_F$ is conducting, current flows from the battery through thyristor $14_F$ armature 10 and transistor $15_F$. During non-conducting periods of transistor $15_F$, the inductance of the armature maintains current flow through the closed loop consisting of diode $16_F$ and thyristor $14_F$. By varying the ratio of time of conduction to time of non-conduction of transistor $15_F$ the net voltage applied to the aramture can be varied. Since the inductance of the armature is relatively low it is advantageous to operate the transistor $15_F$ at a relatively high switching frequency.

To effect regenerative braking of the motor when the armature is rotating in the "forward" direction, transistor $15_F$ is held non-conducting and the gating signal to thyristor $14_F$ is removed. After a time sufficient to allow the freewheel current through diode $16_F$ and thyristor $14_F$ to fall below the holding value of thyristor $14_F$, so that the thyristor is commutated, the control circuitry 18 begins to switch transistor $15_R$ repetitively on and off. As long as the motor armature 10 continues to rotate in the "forward" direction it will generate a voltage with the side of the armature connected to transistor $15_R$ positive with respect to the side connected to transistor $15_F$. Therefore, when transistor $15_R$ is conducting, the armature-generated voltage drives current in the loop consisting of the armature 10, transistor $15_R$ and diode $17_R$, producing a braking torque on the armature. Owing to the low inductance of the armature the current in this loop rises rapidly. When transistor $15_R$ is turned off, the resulting fall in armature current produces an inductive voltage, in the same direction as the armature-generated voltage, which drives current through the circuit consisting of the armature 10, diode $16_R$, battery 12 and diode $17_R$, the inductive energy being thus transferred from the armature to the battery. When transistor $15_R$ is switched on again, the armature current again builds up in the loop including the transistor $15_F$ and diode $17_R$. Thus charging current flows through the battery 12 during non-conducting periods of transistor $15_F$ as long as the net voltage across the armature 10 exceeds the battery voltage. The mean armature current, and therefore the braking torque, can be controlled by varying the mark-to-space ratio of switching of the transistor $15_R$.

When the speed of rotation of the armature has been reduced to zero, or to a value below which the armature voltage during non-conducting periods of transistor $15_F$ is less than battery voltage, a gating signal is applied to thyristor $14_R$, to bring the circuit into the "reverse" driving mode. The armature will then come to a standstill and accelerate in the "reverse" direction, the speed of the motor being controlled by controlling the mark-to-space ratio of transistor $15_R$.

It will be apparent that regenerative braking of the motor can similarly be effected when the armature is rotating in reverse, by repetitive switching of transistor $15_F$ whilst transistor $15_R$ and the two thyristors remain non-conducting.

Regenerative braking can be initiated by changing over the direction selector 36 when the motor is rotating, the logic circuitry sensing the direction of the armature generated voltage and switching the circuit to the regenerative braking mode until the armature voltage has fallen below a predetermined low level. The logic circuitry also acts to switch the circuit to the regenerative braking mode if the motor speed demanded by the input to the circuit falls to zero, for example if the driver of the vehicle lifts his foot from the accelerator pedal or moves the direction selector switch to a neutral position, so that the motor speed is brought gradually to zero.

Figure 3 shows the voltage V across the collector-emitter circuit of transistor $15_F$ during forward motoring. The waveforms $\underline{3a}$, $\underline{3b}$ and $\underline{3c}$ show the voltage at zero demand, 50% demand and 100% demand respectively. At 100% demand, the transistor is switched at the maximum mark-to-space ratio, i.e. with the length of the non-conducting periods reduced to a minimum. If, during a period of conduction of the transistor $15_F$, the motor current exceeds a predetermined value, the transistor $15_F$ is immediately turned off and is not turned on again until the end of the next succeeding clock cycle. In these "off" periods the demand signal supplied to the clock circuit 30 is attenuated within the circuit 30, so that when the current limit conditions end, i.e. when the motor current fails to reach the predetermined level during an "on" period of the transistor, the mark-to-space ratio of switching has been reduced and gradually rises again to the level set by the signal from the accelerator position sensor 32.

As shown in Figure 4, at the start of regnerative braking, at time $t_o$, the circuit 18 switches transistor $15_R$ on and off at a relatively high mark-to-space ratio, so that the motor current I rises to the current limit level $I_L$. The current limit circuit then comes into operation, so that the motor current, and therefore the braking torque, is controlled.

- 12 -

At the end of the current limit period, the mark-to-space ratio gradually rises again.  Since the motor speed and therefore the motor-generated voltage is decreasing, the motor current falls, but the rate of decrease of motor current is reduced by the increase in mark-to-space ratio. The braking torque on the motor is therefore maintained until the motor speed falls to a low value.

It will be appreciated that modifications could be made in the described embodiment.  For example, the inputs to the control circuit 18 could take forms other than the manually controlled inputs described.

CLAIMS:

1.      A pulse control circuit for a permanent magnet d.c. motor, comprising first and second thyristors and first and second transistor switches arranged in a bridge circuit with the thyristors in adjacent arms of the bridge and the first and second transistor switches in arms of the bridge opposite the first and second thyristors respectively, the d.c. supply being connected in use between the common junction of the two thyristors and the common junction of the two transistor switches, and the motor armature being connected in use between the junction of the first thyristor with the second transistor switch and the junction of the second thyristor with the first transistor switch, the arrangement being such that on conduction of the first thyristor and first transistor switch the voltage of the d.c. supply is applied in one direction to the armature whereas on conduction of the second thyristor and second transistor switch the voltage of the d.c. supply is applied in the opposite direction to the armature, and control means for applying a gating signal to a selected one of the first and second thyristors and for repetitively switching on and off the associated transistor switch thereby to drive the armature in the direction corresponding to the selected thyristor, a respective diode being connected in parallel with the series connection of the armature and each thyristor to provide a freewheel path for armature current during non-conducting periods of the associated transistor switch.

2.      A pulse control circuit as claimed in claim 1, in which the control means is adapted to effect regenerative braking of the motor by repetitively switching on and off the transistor switch associated with drive of the motor in one direction whilst the armature is rotating in the opposite direction, the other transistor switch and both thyristors remaining non-conducting, a further respective diode being connected in parallel with the non-conducting transistor switch to provide with the operating transistor switch a closed loop for circulation of the armature current when the transistor switch is conducting and to provide, with the diode connected across the associated thyristor and the armature, a path through which the armature generated voltage can drive current to the d.c. supply when the transistor switch is non-conducting.

3.      A pulse control circuit as claimed in
claim 2, in which current limit means are provided to limit
the current flowing through the motor armature during
regenerative braking, the current limit means being operative
to limit the mark-to-space ratio of switching of the operating
transistor when the armature current rises to a predetermined
value.

4.      A pulse control circuit as claimed in claim 3,
in which the said control means is adapted, when regeneration
braking commences, to switch the operating transistor on and
off at a relatively high mark-to-space ratio until the
armature current reaches the said predetermined value.

5.      A pulse control circuit as claimed in claim 3 or
claim 4, in which the current limit means is operable also
during normal motoring.

FIG.1

FIG. 2

0038214

FIG.3

FIG.4

0038214